# EUROPEAN PATENT APPLICATION

(11) **EP 4 376 168 A1**
(43) Date of publication of application: **29.05.2024**
(21) Application number: 22209618.2
(22) Date of filing: 25.11.2022
(51) Int. Cl.: H01M 10/613, H01M 10/625, H01M 10/6556, H01M 10/6567, H01M 50/207, H01M 50/209, H01M 50/244, H01M 50/249, H01M 50/258, H01M 50/262

(54) **BATTERY STACK COMPRISING BATTERY MODULES AND A COOLING SYSTEM**

(71) Applicant: VOLVO TRUCK CORPORATION, 405 08 Göteborg (SE)
(72) Inventor: ARNESSON, Simon, 475 32 ÖCKERÖ (SE); ROUT, Dhirendra, 414 82 GÖTEBORG (SE)
(74) Representative: Kransell & Wennborg KB

(57) **Abstract**

The present disclosure relates to a battery stack (1) for an electrified vehicle (2), the battery stack (1) comprising a cooling system (3), the battery stack (1) comprising a first and a second battery module (4,5), the battery stack extending in a height direction (y), a width direction (x) and a depth direction (z), each of the first and the second battery modules (4,5) comprising battery cells (6) being stacked in the depth direction (z), the first and the second battery modules (4,5) comprising a first and a second supporting side wall (7,8) for supporting the battery cells (6) in the respective battery module (4,5), the first and the second supporting side wall (7,8) of the battery modules (4,5) being opposing vertical side walls provided on a respective side of the battery cells (6) in the battery modules (4,5), the first and/or the second supporting side wall (7,8) having a respective inner side (7a,8a) facing the battery cells (6) and a respective outer side (7b,8b) facing away from the battery cells (6), the first and/or the second supporting side wall (7,8) comprising first supporting element(s) adapted to support and bear the load of the battery cells (6) in the first and second battery modules (4,5), as seen in the height direction (y), or alternatively a respective bottom support plate (15,16) is connected to the first and the second supporting side walls (7,8), the first and/or the second supporting side wall (7,8) comprises liquid cooling channels (12), the liquid cooling channels (12) being in the form of a groove (13) provided in the first and/or second supporting side wall (7,8) on an outer side thereof (7b,8b), the groove (12) being covered by a cover plate (14), arranged on the outer side (7b,8b) of the first and/or the second supporting side wall (7,8), thereby forming integrated liquid cooling system (3) for the first and the second battery module (4,5) in the first and/or second supporting side wall (7,8).

## Description

### TECHNICAL FIELD

The disclosure relates generally to a battery stack for a vehicle. In particular aspects, the disclosure relates to a battery stack comprising battery modules and a cooling system. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Batteries are becoming a common source of power for providing propulsion for vehicles. Such batteries are often rechargeable batteries and typically include a battery pack including a number of battery modules having a number of battery cells that may be connected in series or in parallel, forming a complete battery system for the vehicle.

With trucks, trailers and/commercial vehicles, space within the vehicle frame is typically at a premium because the space typically must support assorted components, such as, by way of example, air tanks, service lines, fuel tanks, fuel and electrical lines, hydraulic lines and systems, drive trains and accessories, and/or the like.

Battery packs may typically include means for controlling the temperature of the battery pack since the safety, storage capacity and charging speed of battery packs are temperature dependent. Cooling systems thus need to be able to keep the battery pack in specified temperature ranges. Liquid cooling is a popular solution within battery systems for vehicles.

This involves pumping coolant through pipes and plates built into the battery packs.

Typical cooling assembly design includes cooling plate interface at the bottom of the battery modules, which may not provide sufficient cooling for demanding applications. This may furthermore not be the best solution for multilayer cell stack solutions used in truck/industrial application due to available space specifics.

In view of the above, it is an object to provide an improved cooling of the battery modules in a battery stack.

### SUMMARY

According to a first aspect of the disclosure, the present disclosure relates to a battery stack for an electrified vehicle. The battery stack comprises a cooling system and a first and a second battery module. The battery stack extends in a height direction, a width direction and a depth direction. Each of the first and the second battery modules comprises battery cells being stacked in the depth direction. The first and the second battery modules comprises a first and a second supporting side wall for supporting the battery cells in the respective battery module. The first and the second supporting side wall of the battery modules are opposing vertical side walls provided on a respective side of the battery cells in the battery modules. The first and the second supporting side wall have a respective inner side facing the battery cells and a respective outer side facing away from the battery cells. The first and/or the second supporting side wall furthermore comprise(s) first connecting/supporting element(s) supporting the battery cells in the first and second battery modules, as seen in the height direction, or alternatively a respective bottom support plate is connected to the first and the second supporting side walls. The first and/or the second supporting side wall comprise(s) a liquid cooling channel, the liquid cooling channel being in the form of a groove provided in the first and/or second supporting side wall on an outer side thereof. The groove is covered by a cover plate, arranged on the outer side of the first and/or the second supporting side wall, thereby forming integrated liquid cooling system for the first and the second battery module in the first and/or second supporting side wall.

The first aspect of the disclosure may seek to improve the cooling of a battery stack comprising at least a first and a second battery modules.

A technical benefit may include that the liquid cooling system according to the present disclosure is that side cooling with one common side wall for a battery stack is enabled. This solution both allows for a direct contact and increased surface area in contact with the battery cells while allowing for a robust support for the battery cells and a facilitated cooling system since it forms an integrated part of the side walls.

In some examples, the battery stack comprises three, four, five, six, seven or eight battery modules, or more. Each one of the battery modules comprises battery cells and is a battery module according to the first and/or the second battery module. The battery stack may generally comprises 50-1500 battery cells. The number of battery modules in the battery stack and the number of battery cells varies depending on type of vehicle and type of installation, etc.

The groove or grooves formed in the first and/or second side wall is a long narrow channel, such as a slot cut in the first and/or second supporting side walls which form(s) an integrated liquid cooling system by sealing it off with the cover plate.

In some examples, the liquid cooling system and the cover plate is a common liquid cooling system and a common cover plate for the first and the second battery module. A technical benefit may include that a simplified cooling system is provided.

In some examples, the first and the second supporting side wall each comprises battery stack top supporting elements adapted to support the battery cells in the first and second battery modules, as seen from an upper end of the battery cells. A technical benefit may include that a robust support for the battery cells is provided.

The battery stack may comprise the respective bottom support plate and the respective bottom support plate are mechanically, adhesively or connected by means of welding to the first and the second supporting side wall respectively. A technical benefit may include that a robust battery stack structure for the battery cells is provided.

The first and the second supporting side wall may each comprises one cooling liquid inlet and one cooling liquid outlet. A technical benefit may include that an improved and simplified liquid cooling system is provided which requires less components and handling since it is a common system for the battery stack.

In some examples, the first and/or the second supporting side wall on the outer side thereof, comprises one or more protruding edge portions, protruding out from the first and/or the second supporting side wall and past the cover plate. A technical benefit may include that two battery stacks according to the present disclosure may be mounted next to each other as seen in the horizontal direction and be connected to each other at the protruding edge portions of the respective battery stack without affecting the cover plate and the cooling of the respective battery modules.

In some examples, the one or more protruding edge portions extends along an entire upper edge of the first and/or the second supporting side wall on the outer side thereof, optionally, the one or more protruding edge portions forms a frame extending along the edges of the entire first and/or the second supporting side wall. A technical benefit may include that two battery stacks according to the present disclosure may be stably mounted next to each other as seen in the horizontal direction and be connected to each other at the protruding edge portions of the respective battery stack without affecting the cover plate and the cooling of the respective battery modules.

In some examples, 60% or more of the surface of the outer side of the first and/or second side wall which is covered by the cover plate constitutes of the groove provided in the first and/or second supporting side wall. A technical benefit may include that an effective cooling by simplified cooling of the battery modules may be provided.

In some examples, wherein 80%, preferably 80-95%, of the surface of the outer side of the first and/or second side wall which is covered by the cover plate constitutes of the groove provided in the first and/or second supporting side wall. A technical benefit may include that an effective cooling by simplified cooling of the battery modules may be provided while still enable connections of for example a bottom support plate to the first and/or second side wall by means of mechanical fasteners, such as screws.

In some examples, a depth of the groove is within the range of from 1.5 mm to 5 mm. A technical benefit may include that an efficient cooling channel in the first and/or second side wall is provided while still providing a relatively slim structure.

In some examples, the first and second side walls extend in the height direction between a respective upper edge surface and a respective lower edge surface of the respective vertical side walls, the respective upper edge surface and/or the respective lower edge surface being provided with a respective stacking member to enable stacking of a second battery stack provided with mating stacking members. A technical benefit may include that that a highly flexible battery stack having an improved integrated cooling system may be provided

According to a second aspect of the disclosure, an electrical propulsion system comprising an electrical machine and a battery stack according to the first aspect is provided, wherein the electric machine is configured to receive power from the battery stack as disclosed herein. The second aspect of the disclosure may seek to provide an electrical propulsion system comprising an electrical machine and an improved battery stack. A technical benefit may include an improved and controlled cooling of the battery stack.

According to a third of the disclosure, a vehicle comprising a battery stack according to the first aspect or an electrical propulsion system according to the second aspect is provided.

According to a fourth aspect of the disclosure, a stationary energy storing system comprising a battery stack according to the first aspect is provided.

According to a fifth aspect, the present disclosure relates to a marine vessel comprising the battery stack according to the first aspect.

The battery stack may thus be used in various applications, such as busses, trucks, construction equipment, marine vessels and/or industrial equipment's and the present disclosure relates to each of these applications comprising a battery stack according to the present disclosure.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary vehicle comprising a battery stack according to one example.
**FIG. 2** illustrates an exemplary battery stack according to the present disclosure.
**FIG. 3** is an exploded view of the battery stack illustrated in FIG. 2.
**FIG. 4** is a cross-sectional view of the battery stack illustrated in FIGS. 2 and 3 taken along lines A-A.

### DETAILED DESCRIPTION

Aspects set forth below represent the necessary information to enable those skilled in the art to practice the disclosure.

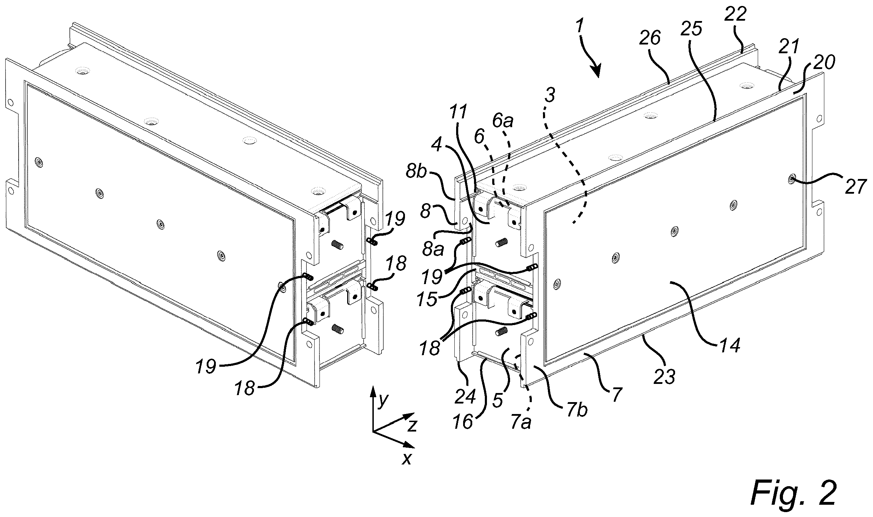

It is essential to include means for controlling the temperature in battery stacks, since the safety, storage capacity and charging speed of battery stacks are temperature dependent. Cooling systems are thus needed to be able to keep the battery stack in specified temperature ranges. Liquid cooling is a commonly used solution within battery systems for vehicles. This involves pumping cooling liquid through pipes and plates built into the battery packs. Typical cooling assembly design includes cooling plate interface at the bottom of the battery modules. However, additional cooling performance is required, and performance may not be achievable with bottom side cooling. The battery stack comprising at least a first and a second battery modules comprising a liquid cooling system according to the present disclosure provides an improved and simplified control of the temperature in the battery stacks as shown in FIG. 2. A technical benefit with the liquid cooling system according to the present disclosure is that side cooling with one common side wall for a battery stack is enabled. This solution both allows for a direct contact and increased surface area in contact with the battery cells while allowing for a robust support for the battery cells and a facilitated cooling system since it forms part of the side walls and not requires a separate pipe system installed in connection with the battery stack.

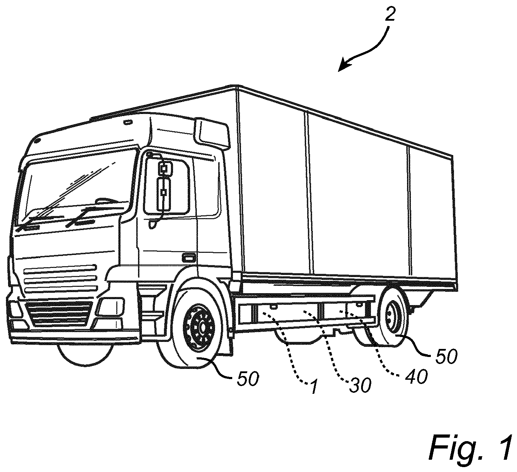

FIG. 1 illustrates a vehicle 2 in the form of an electrified truck with an electrified propulsion. The electrified truck is powered by an electrical energy storage system comprising a battery stack 1. The electrified truck 2 comprises an electrical propulsion system 30 configured to provide traction power to the vehicle 2. The electrical propulsion system 30 provides electrical power to an electrical motor 40. The electrical propulsion system 30 comprises the battery stack 1 and the electrical motor 40. The battery stack 1 is connected to the electrical motor 40 to provide power to the electrical motor 40, thereby the electrical motor 40 can provide traction power to one or more ground engaging members, e.g. one or more wheels 50. The battery stack 1 comprises at least a first and a second battery module 4,5, each comprising a number of battery cells respectively 6,7.

FIG. 2 illustrates a two side views of the battery stack 1 shown in FIG. 1. The battery stack 1 comprises a first and a second battery module 4,5. The battery stack extends in a height direction y, a width direction x and a depth direction z. Each of the first and the second battery modules 4,5 comprises battery cells 6 being stacked in the depth direction z. The battery stack 1 illustrated in FIG. 2 comprises two battery modules. However, the battery stack may comprise three, four, five, six, seven or eight battery modules, or more. Each one of the battery modules comprises battery cells and being a battery module according to the first and/or the second battery module. The battery stack may generally comprise 50-1500 battery cells. The number of battery modules in the battery stack and the number of battery cells varies depending on type of vehicle and type of installation, etc.

The first and the second battery modules 4,5 comprise a common first supporting side wall 7 and a common second supporting side wall 8 for supporting the battery cells 6 in the respective battery module 4,5. The first and the second supporting side wall 7,8 of the battery modules 4,5 are opposing vertical side walls provided on a respective side of the battery cells 6 in the battery modules 4,5. The first and the second supporting side wall 7,8 have a respective inner side 7a,8a facing the battery cells 6 and a respective outer side 7b,8b facing away from the battery cells 6. In FIG. 2, the battery stack 1 comprises a bottom support plate 15,16 for the respective first and second battery modules 4,5 connected to the first and the second supporting side walls 7,8.

The first and the second supporting side wall 7,8 each comprises battery stack top supporting elements 11 adapted to support the battery cells 6 in the first and second battery modules 4,5, as seen from an upper end 6a of the battery cells 6.

In FIG. 2, the bottom support plate 15 supporting the first module 4 is mechanically connected to the first and the second supporting side wall 7,8 by screw connections.

The first and second side walls 7,8 extend in the height direction y between a respective upper edge surface 21,22 and a respective lower edge surface 23,24 of the respective vertical side walls 7,8. The respective upper edge surface 21,22 and/or the respective lower edge surface 23,24 are provided with a respective stacking member 25,26 to enable stacking of a second battery stack provided with mating stacking members.

Each of the first and the second supporting side wall 7,8 comprises one cooling liquid inlet 18 and one cooling liquid outlet 19.

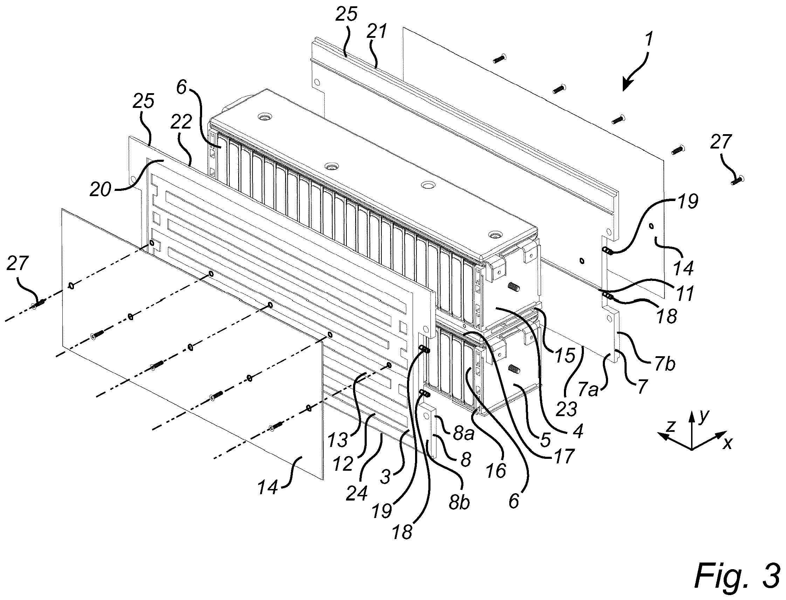

FIG. 3 is an illustration of the battery stack 1 in FIG. 2 in an exploded view. As illustrated in Fig. 3, the battery stack 1 comprises a cooling system 3. The first and the second supporting side wall 7,8 comprise a liquid cooling channel 12. The liquid cooling channels 12 are in the form of grooves 13 provided in the first and the second supporting side wall 7,8 on an outer side thereof 7b,8b. The grooves 13 are covered by a respective cover plate 14, arranged on the outer side 7b,8b of the first and the second supporting side wall 7,8, thereby forming integrated liquid cooling systems 3 for the first and the second battery module 7,8 in the first and the second supporting side wall 7,8. The first and the second supporting side wall 7,8 each comprises one cooling liquid inlet 18 and one cooling liquid outlet 19 to enable the cooling liquid to enter and to exit the liquid cooling system 3.

In some examples, 60% or more of the surface area of the first and/or the second side wall 7,8 constitute of the groove(s) 13, the calculations being based on the surface area of the outer side 7b,8b of the first and/or second side wall 7,8 which is covered by the cover plate 14. In some examples, 80%, preferably 80-95%, of the surface area of the outer side 7b,8b of the first and/or second side wall 7,8 which is covered by the cover plate 14 constitute(s) of the grooves 13.

The groove in the first and/or the second side wall 7,8 may have a depth within the range of from 1 mm to 8 mm, preferably within the range of from 1.5 mm to 5 mm.

The bottom support plate 15 supporting the first module 4 is in this figure mechanically connected to the first and the second supporting side wall 7,8 by screws 27 extending through the cover plate 14 and the first and the second supporting side walls 7,8 and engaging with the bottom support plate 15 supporting the first module 4.

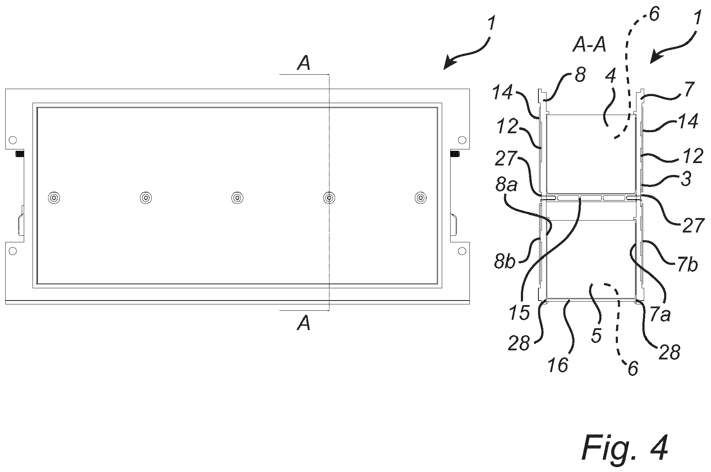

FIG. 4 is a cross-sectional view of the battery stack 1 illustrated in FIGS. 1-3 and illustrates the battery stack 1 in a cross-section taken along lines A-A and illustrates the first module 4 being arranged on top of the second module 5. The battery stack comprises first and the second supporting side wall 7,8 and the battery cells 6 in the respective battery modules 4,5 are supported by a respective bottom plate 15,16. The first and the second side walls 7,8, are connected to the bottom plate 15 supporting the battery cells 6 in the first module 4 by mechanical fasteners in the form of screws 27 extending through the respective cover plates 14 arranged on the first and second side walls 6, and through the first and the second supporting side wall 7,8 respectively. In FIG. 4, the bottom plate 16 supporting the battery cells 6 in the second module 5 is connected by welding to the respective first and second supporting side wall 7,8 and there is thus a welded connection 28 between the bottom plate 16 of the second module 5 and the respective first and second supporting side wall 7,8.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A battery stack (1) for an electrified vehicle (2), the battery stack (1) comprising a cooling system (3), the battery stack (1) comprising a first and a second battery module (4,5), the battery stack extending in a height direction (y), a width direction (x) and a depth direction (z), each of the first and the second battery modules (4,5) comprising battery cells (6) being stacked in the depth direction (z), the first and the second battery modules (4,5) comprising a first and a second supporting side wall (7,8) for supporting the battery cells (6) in the respective battery module (4,5), the first and the second supporting side wall (7,8) of the battery modules (4,5) being opposing vertical side walls provided on a respective side of the battery cells (6) in the battery modules (4,5), the first and the second supporting side wall (7,8) having a respective inner side (7a,8a) facing the battery cells (6) and a respective outer side (7b,8b) facing away from the battery cells (6), the first and/or the second supporting side wall (7,8) comprising first supporting element(s) adapted to support and bear the load of the battery cells (6) in the first and second battery modules (4,5), as seen in the height direction (h), or alternatively a respective bottom support plate (15,16) is connected to the first and the second supporting side walls (7,8), the first and/or the second supporting side wall (7,8) comprises liquid cooling channels (12), the liquid cooling channels (12) being in the form of a groove (13) provided in the first and/or second supporting side wall (7,8) on an outer side thereof (7b,8b), the groove (13) being covered by a cover plate (14), arranged on the outer side (7b,8b) of the first and/or the second supporting side wall (7,8), thereby forming integrated liquid cooling system (3) for the first and the second battery module (7,8) in the first and/or second supporting side wall (7,8).

2. The battery stack (1) according to claim 1, wherein the liquid cooling system (3) and the cover plate (14) is a common liquid cooling system and a common cover plate for the first and the second battery module (4,5).

3. The battery stack (1) according to any one of the preceding claims, wherein the first and the second supporting side wall (7,8) each comprises a battery stack top supporting element (11) adapted to support the battery cells (6) in the first and second battery modules (4,5), as seen from an upper end (6a) of the battery cells (6).

4. The battery stack (1) according to any one of the preceding claims, wherein the battery stack (1) comprises the respective bottom support plate (15,16) and wherein the respective bottom support plate (15,16) are mechanically, adhesively or connected by welding to the first and the second supporting side wall (7,8) respectively.

5. The battery stack (1) according to any one of the preceding claims, wherein the first and/or the second supporting side wall (7,8) comprise(s) one cooling liquid inlet (18) and one cooling liquid outlet (19).

6. The battery stack (1) according to any one of the preceding claims, wherein the first and/or the second supporting side wall (7,8) on the outer side (7b,8b) thereof, comprises one or more protruding edge portions (20), protruding out from the first and/or the second supporting side wall (7,8) and past the cover plate (14).

7. The battery stack (1) according to claim 6, wherein the one or more protruding edge portions (20) extends along an entire upper edge of the first and/or the second supporting side wall (7,8) on the outer side (7b,8b) thereof, optionally, the one or more protruding edge portions (20) forms a frame extending along the edges of the entire first and/or the second supporting side wall (7,8).

8. The battery stack (1) according to any one of the preceding claims, wherein 60% or more of the surface of the outer side (7b,8b) of the first and/or second side wall (7,8) which is covered by the cover plate constitutes of the groove (13) provided in the first and/or second supporting side wall (7,8).

9. The battery stack (1) according to any one of claims 1 to 7, wherein 80%, preferably 80-95%, of the surface of the outer side (7b,8b) of the first and/or second side wall (7,8) which is covered by the cover plate constitutes of the groove (13) provided in the first and/or second supporting side wall (7,8).

10. The battery stack (1) according to any one of the preceding claims, wherein a depth of the groove (13) is within the range of from 1.5 mm to 5 mm.

11. The battery stack (1) according to any one of the preceding claims, wherein the first and second side walls (7,8) extend in the height direction (y) between a respective upper edge surface (21,22) and a respective lower edge surface (23,24) of the respective vertical side walls (7,8), the respective upper edge surface (21,22) and/or the respective lower edge surface (23,2) being provided with a respective stacking member (25,26) to enable stacking of a second battery stack provided with mating stacking members.

12. An electrical propulsion system (30) comprising an electric motor and a battery stack according to any one of claims 1 to 11, wherein the electric motor is configured to receive power from the battery stack (1).

13. A vehicle (2) comprising a battery stack (1) according to any one of the claims 1 to 11 or an electrical propulsion system according to claim 12.

14. A stationary energy storing system comprising a battery stack (1) according to any one of claims 1 to 11.

15. A marine vessel comprising a battery stack (1) according to any one of claim 1 to 11.
